# EUROPÄISCHE PATENTANMELDUNG

(11) **EP 4 451 524 A1**
(43) Veröffentlichungstag der Anmeldung: **23.10.2024**
(21) Anmeldenummer: 24162961.7
(22) Anmeldetag: 12.03.2024
(51) Int. Cl.: H02K 7/00, H02K 11/40, H01R 13/648, H01R 39/12, H01R 39/64, H02K 13/00, H02K 9/28, B60R 16/06, H05F 3/02, H01R 39/56, H02K 9/19, F16C 41/00, H01R 39/48, H02K 1/32

(54) **ABLEITVORRICHTUNG ZUR ABLEITUNG ELEKTRISCHER STRÖME SOWIE MASCHINE MIT EINER DERARTIGEN ABLEITVORRICHTUNG**

(30) Priorität: 04.04.2023 DE 102023108650
(71) Anmelder: Schunk Carbon Technology GmbH, 4822 Bad Goisern (AT); AUDI AG, 85057 Ingolstadt (DE)
(72) Erfinder: KAIN, Ludwig, 4822 Bad Goisern (AT); TRIEBE, Steffen, 85077 Manching (DE)
(74) Vertreter: advotec.

(57) **Zusammenfassung**

Die Erfindung betrifft eine Ableitvorrichtung (1) zur Ableitung elektrischer Ströme aus einem mit einer Welle (2) ausgebildeten Rotorteil einer Maschine (100), umfassend ein mindestens teilweise in einer eine Führungswandung um eine Außenwand aufweisenden Führungseinrichtung (6) aufgenommenes, verschiebbares Kontaktelement (3) zur Ausbildung eines elektrisch leitenden Schleifkontaktes zwischen einer zur Ausbildung des Schleifkontaktes vorgesehenen Schleifkontaktfläche (4) des Kontaktelements und einer Wellenkontaktfläche (5) der Welle, wobei das Kontaktelement mit der Führungseinrichtung und/oder einem Halteelement der Maschine elektrisch leitend verbunden ist und wobei das Kontaktelement mittels eines Federelements in Richtung der Wellenkontaktfläche vorgespannt ist, wobei das Kontaktelement mindestens teilweise mit einem ölartigen Fluid benetzt ist, wobei in der Führungseinrichtung zumindest eine Leitung (17) für das ölartige Fluid (20) vorgesehen ist, welche in seiner Außenwand (16) mündet oder in seiner Außenwand angeordnet ist.

## Beschreibung

Die vorliegende Erfindung betrifft eine Ableitvorrichtung zur Ableitung elektrischer Ströme aus einem mit einer Welle ausgebildeten Rotorteil einer Maschine, umfassend ein mindestens teilweise in einer Führungseinrichtung aufgenommenes, insbesondere axial verschiebbares Kontaktelement zur Ausbildung eines elektrisch leitenden Schleifkontaktes zwischen einer zur Ausbildung des Schleifkontaktes vorgesehenen Schleifkontaktfläche des Kontaktelements und einer Wellenkontaktfläche der Welle, wobei das Kontaktelement mit der Führungseinrichtung und/oder einem Halteelement der Maschine elektrisch leitend verbunden ist und wobei das Kontaktelement mittels eines Federelements in Richtung der Wellenkontaktfläche vorgespannt ist.

Derartige Ableitvorrichtungen sind in unterschiedlichen Ausführungsformen aus dem Stand der Technik bekannt. Insbesondere ist es bekannt, zur Ableitung niederfrequenter Ströme Kohlebürsten einzusetzen, die in axialer oder radialer Verteilung um eine Welle angeordnet und über Anschlusslitzen mit einem Stator kontaktiert sind. Die dabei in einer Halteeinrichtung bzw. einem Bürstenhalter aufgenommenen Kohlebürsten ermöglichen aufgrund ihres geringen elektrischen Widerstands eine direkte Ableitung elektrischer Ströme und können somit eine unerwünschte Stromführung über Lagerstellen der Welle vermeiden, die aufgrund punktueller Verschweißung oder Funkenerosion zu Oberflächenschäden der Lagerkörper oder Lagerringe führen könnte.

Der Begriff "Welle" wird vorliegend als ein Synonym für den Begriff "Rotorteil" oder "Achse" verwendet. Daher sind unter den Begriffen "Welle" alle drehenden Maschinenteile zu verstehen, für die eine Ableitung von Strömen in ein feststehendes Statorteil bzw. Maschinenteil einer Maschine erfolgen kann.

Ableitvorrichtungen werden auch regelmäßig in der Bahntechnik eingesetzt, wo Wechselströme oder auch ein Arbeitsstrom über Radachsen abfließen kann. Derartige Ableitvorrichtungen sind beispielsweise in DE 10 2010 039 847 A1 beschrieben.

Auch bei elektrischen Maschinen im Allgemeinen, beispielsweise für Kraftfahrzeuge, sind Maßnahmen zur Ableitung von Strömen erforderlich. Bei Motorantriebswellen oder daran angeschlossenen Getriebewellen bzw. anderen funktionalen Komponenten können kontinuierlich schwankende Wechselspannungen bzw. Ströme und hochfrequente Strompulse auftreten, die auch Lagerstellen einer Rotorwelle oder Getriebewelle schädigen können, weshalb hier regelmäßig Ableitvorrichtungen erforderlich sind.

Ein Problem bei den beschriebenen Ableitvorrichtungen und den solche Ableitvorrichtungen aufweisenden Maschinen besteht in der hohen Wärmeentwicklung bedingt durch elektrische und mechanische Verluste, die zu hohen thermischen Belastungen sowohl der Ableitvorrichtung als auch der Maschine (z. B: Motor, Getriebe) führt. Um dieses Problem einigermaßen in den Griff zu bekommen, wurde bislang oft über Lüftungseinrichtungen ein Abtransport der entstehenden Wärme bewerkstelligt. Allerdings kann über derartige Lüftungseinrichtungen nur teilweise eine Minimierung der thermischen Bauteilbelastung erreicht werden. Ein weiterer Nachteil derartiger Lüftungseinrichtungen besteht in der drastischen Erhöhung der Bauraumgröße, welche nötig ist, um derartige Lüftungseinrichtungen in die betreffenden Maschinen zu integrieren.

Um die oben genannten Nachteile zu überwinden, beschreibt die WO 2022/135715 A1 eine Ableitvorrichtung, bei welcher das Kontaktelement im Bereich seiner Schleifkontaktfläche mit einem ölartigen Fluid benetzt ist. Mithilfe des ölartigen Fluids wurde erreicht, die entstehende Wärme im Kontaktbereich zwischen dem Kontaktelement und der Welle einzudämmen bzw. abzuführen. Eine in der besagten Druckschrift offenbarte Ableitverbindung weist einen parallel zum Kontaktelement angeordneten, in axialer Richtung verlaufenden Ölleitungskanal auf, mit welchem ölartiges Fluid in den Raum zwischen der Welle und der Führungseinrichtung, welcher durch das Kontaktelement überbrückt wird, eingespeist wird. Damit wird erreicht, dass das Kontaktelement in diesem Bereich mit ölartigem Fluid benetzt wird. Der Nachteil bei der beschriebenen Vorrichtung besteht unter anderem darin, dass das ölartige Fluid nur in axialer Richtung in dem Raum zwischen Welle und Führungseinrichtung geleitet wird. Eine weitere Kühlung des Rotors ist mit dieser Ableitvorrichtung nicht ausreichend möglich. Auch eine Lagerschmierung oder eine Schmierung/Kühlung weiterer Motorteile mit dem ölartigen Fluid ist ebenfalls nicht möglich.

Der vorliegenden Erfindung liegt die Aufgabe zugrunde, die oben geschilderten Nachteile aus dem Stand der Technik zu überwinden.

Diese Aufgabe wird erfindungsgemäß durch eine Ableitvorrichtung der eingangs genannten Art gelöst, welche dadurch gekennzeichnet ist, dass in der Führungseinrichtung zumindest eine Leitung für das ölartige Fluid vorgesehen ist, welche in seine Außenwand mündet oder in seiner Außenwand angeordnet ist.

Mit der erfindungsgemäßen Ableitvorrichtung wird auf ideale Weise eine Ölführung in radialer Richtung nach außen erreicht. Dadurch ist es auf einfache Art und Weise möglich, eine Rotorkühlung mittels ölartigem Fluid zu erreichen. Auch eine Lagerschmierung kann durch den radialen Ölfluss erreicht werden. Um diese Vorteile mit den bisher bekannten Ableitvorrichtungen mit Ölführungen in axialer Richtung zu erreichen, müssten Querbohrungen zum axial verlaufenden Ölkanal in die Führungseinrichtung eingebracht werden. Dies ist prozesstechnisch problematisch und umständlich.

Bei einer besonders bevorzugten Ausführungsform der erfindungsgemäßen Ableitvorrichtung ist die Leitung für das ölartige Fluid eine Längsausnehmung in der Außenwand der Führungseinrichtung, welche sich vorzugsweise von einem unteren Ende der Führungseinrichtung über einen Teil der Länge der Führungseinrichtung erstreckt. Das Einbringen einer solchen Längsausnehmung im Außenumfang der Führungseinrichtung lässt sich bei der Herstellung einfach verwirklichen.

Mit Vorteil ist die Längsausnehmung zumindest abschnittsweise mit einem im Wesentlichen U-förmigen Querschnitt, vorzugsweise in Art einer Nut, ausgebildet. Eine solche U-förmige Nut hat sich als besonders vorteilhaft bei der Ölführung erwiesen.

Eine besonders bevorzugte Ausführungsform der erfindungsgemäßen Ableitvorrichtung ist teilweise in einer Haltevorrichtung integriert, welche die oben genannte Längsausnehmung bis auf einen Endbereich vollständig abdeckt, insbesondere abdichtend abdeckt. Hierbei entsteht ein beidseitig offener Ölführungskanal, bei welchem das Öl durch den nicht abgedeckten Endbereich der Längsausnehmung in radialer Richtung abfließen kann. Diese Ausführungsform wird in der Figurenbeschreibung noch detaillierter illustriert.

Bei einer weiteren Ausführungsform der erfindungsgemäßen Ableitvorrichtung ist die Leitung als in der Führungseinrichtung verlaufender Kanal ausgebildet, welcher vorzugsweise am unteren Ende der Führungseinrichtung entspringt und in seiner Außenwand mündet. Bei diesem Kanal handelt es sich also um einen beidseitig offenen, ansonsten jedoch geschlossenen, in der Wandung der Führungseinrichtung verlaufenden Kanal.

Eine bevorzugte Ausführungsform der erfindungsgemäßen Ableitvorrichtung ist gekennzeichnet durch mindestens eine weitere Leitung in der Führungseinrichtung für das ölartige Fluid, welch in einer oberen Stirnfläche der Führungseinrichtung mündet, wobei sich die Leitung vorzugsweise von einem unteren Ende der Führungseinrichtung, insbesondere einem Deckel der Führungseinrichtung zur oberen Stirnfläche der Führungseinrichtung erstreckt. Bei diesem Kanal handelt es sich insbesondere um einen parallel zur Längsachse der Führungseinrichtung verlaufenden Kanal, mit welchem ölartiges Fluid in den Raum zwischen der Führungseinrichtung und der Welle, welcher durch das Kontaktelement überbrückt wird, eingebracht wird. Bei dieser Ausführungsform ist also eine Ölführung sowohl in axialer als auch in radialer Richtung möglich. Diese Ausführungsform ist besonders vorteilhaft bei der Kühlung und Schmierung einer erfindungsgemäßen Ableitvorrichtung sowie einer erfindungsgemäßen Maschine.

Mit Vorteil ist die Führungseinrichtung mindestens teilweise aus einem niederohmigen Material, insbesondere aus Metall, vorzugsweise aus Aluminium, Aluminiumlegierung, Kupfer und/oder Messing gefertigt.

Bei einer besonders bevorzugten Ausführungsform der erfindungsgemäßen Ableitvorrichtung ist die Führungseinrichtung mit einem Statorteil der Maschine elektrisch leitend verbindbar. Dieses Statorteil der Maschine kann beispielsweise als Halteeinrichtung für die Ableitvorrichtung dienen. Beim Ableiten des Stromes wird dieser von der betreffenden Welle in das Kontaktelement und die Führungseinrichtung der Ableitvorrichtung abgeleitet. Dann fließt der abgeleitete Strom bei der beschriebenen Ausführungsform in das genannte Statorteil der Maschine.

Mit Vorteil ist das Kontaktelement mit der Führungseinrichtung mittels einer, vorzugsweise niederohmigen Litze elektrisch leitend verbunden, wobei die Litze an einem Ende vorzugsweise in das Kontaktelement eingepresst oder eingestampft ist und am anderen Ende mit der Führungseinrichtung vorzugsweise verschweißt oder verlötet oder gecrimpt ist.

In der Regel ist das Kontaktelement eine stift- oder bolzenförmig ausgebildete Bürste. Die Schleifkontaktfläche kann rechteckig, polygonal oder kreisförmig ausgebildet sein. Die genannte Bürste wird in der Regel durch Formpressen und anschließender thermischer Behandlung gefertigt.

Vorteilhaft kann das Federelement eine Schraubendruckfeder sein, welche mit einem Ende vorzugsweise an der der Schleifkontaktfläche gegenüberliegenden Stirnseite des Kontaktelements anliegt. Mit einer derartigen Schraubendruckfeder ist es auf einfache Art und Weise möglich, das Kontaktelement stets mit einem bestimmten gewünschten Anpressdruck an die Welle anzudrücken.

Die vorliegende Erfindung betrifft ferner eine Maschine, insbesondere einen elektrischen Antriebsmotor oder Getriebe, mit einem eine Welle aufweisenden Rotorteil sowie einer erfindungsgemäßen Ableitvorrichtung nach einem der Ansprüche 1 bis 11, wobei das Kontaktelement der Ableitvorrichtung zur Ausbildung eines Schleifkontaktes die Welle mit seiner Schleifkontaktfläche kontaktiert. Mit der erfindungsgemäßen Maschine werden die bereits oben beschriebenen Vorteile einer drastisch reduzierten thermischen Belastung bei geringer Baugröße und unkompliziertem Aufbau erzielt.

Des Weiteren wird eine optimale Kühlung und Schmierung der gesamten Maschine erzielt.

Bei einer besonders bevorzugten Ausführungsform der erfindungsgemäßen Maschine wird die Ableitvorrichtung von einem Haltelement gehalten. Vorzugsweise ist dabei die Ableitvorrichtung teilweise in einem Halteelement angeordnet, wobei die Ableitvorrichtung in das Halteelemnt eingepresst sein kann. Eine Mündung der Leitung für das ölartige Fluid in der Außenwand der Führungseinrichtung ist bei dieser Ausführungsform nicht vom Haltelement bedeckt, sodass ölartiges Fluid in radialer Richtung aus der Leitung strömen kann.

Bei einer besonders bevorzugten Ausführungsform der erfindungsgemäßen Maschine ist die Leitung in der Führungseinrichtung eine Längsausnehmung, insbesondere Längsnut in der Außenwand der Führungseinrichtung, welches sich vorzugsweise von einem unteren Ende der Führungseinrichtung über einen Teil der Länge der Führungseinrichtung erstreckt, wobei das Halteelement die Längsausnehmung teilweise bedeckt, vorzugsweise abdichtend bedeckt, sodass das Halteelement mit der Längsausnehmung einen Leitungskanal für das ölartige Fluid bildet. Diese Ausführungsform ist besonders simpel in der Herstellung und bewirkt eine optimale Leitung des ölartigen Fluids in radialer Richtung, sodass eine Kühlung auch des Rotors sowie eine Lagerschmierung möglich ist.

Bei einer bevorzugten Ausführungsform der erfindungsgemäßen Maschine kontaktiert das Kontaktelement eine Stirnfläche der Welle, welche in einer Ausnehmung der Welle angeordnet ist, wobei in einer Wandung der Ausnehmung mindestens eine Aussparung zum Abfließen von ölartigem Fluid angeordnet ist. Mit dieser Ausführungsform ist ein Ölstrom in radialer Richtung von der Ölleitung der Führungseinrichtung über die Mündung der Ölleitung in der Außenwand der Führungseinrichtung durch die Aussparung in der Wandung der Ausnehmung der Welle hindurch möglich.

Weitere Merkmale der Erfindung ergeben sich aus den nachfolgenden Figurenbeschreibungen in Verbindung mit den Zeichnungen und den Unteransprüchen. Hierbei können die einzelnen Merkmale alleine oder in Kombination miteinander verwirklicht sein.

In den Zeichnungen zeigen:
- **Fig. 1**: einen Längsschnitt durch eine erfindungsgemäße Ableitvorrichtung;
- **Fig. 2**: einen Längsschnitt durch die Ableitvorrichtung von Fig. 1 in einem in eine erfindungsgemäße Maschine integrierten Zustand;
- **Fig. 3**: eine perspektivische Darstellung der Ableitvorrichtung und Maschine von Fig. 2;
- **Fig. 4**: eine perspektivische Darstellung der Ableitvorrichtung und der Maschine gemäß Fig. 2.

Nachfolgend werden gleiche oder funktionsgleiche Elemente mit den gleichen Bezugszeichen versehen.

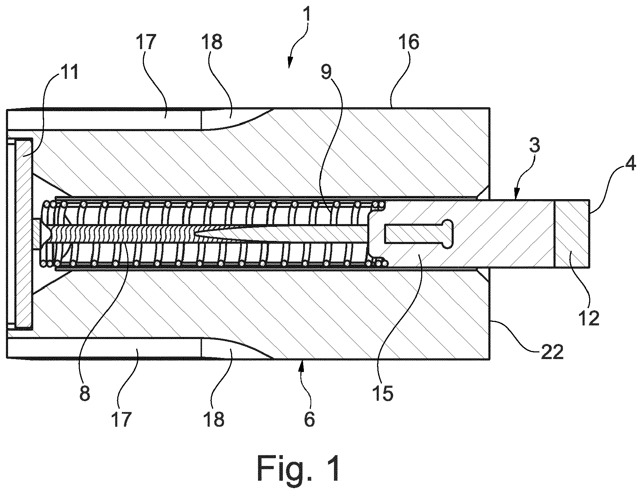

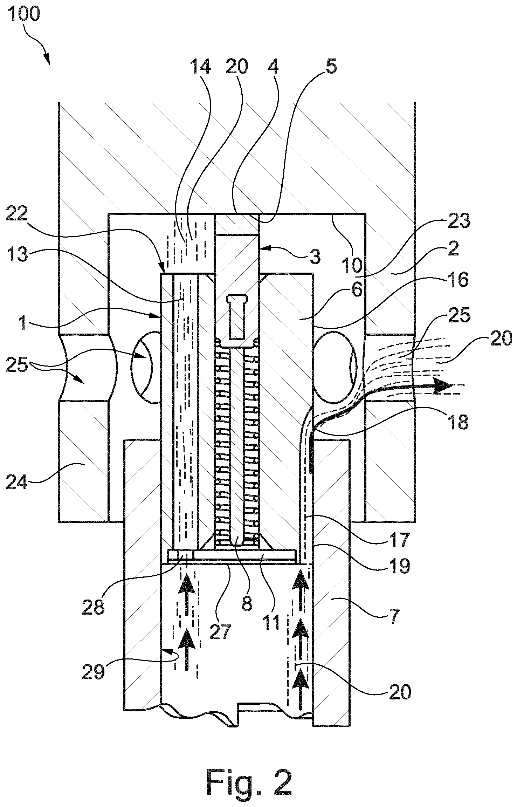

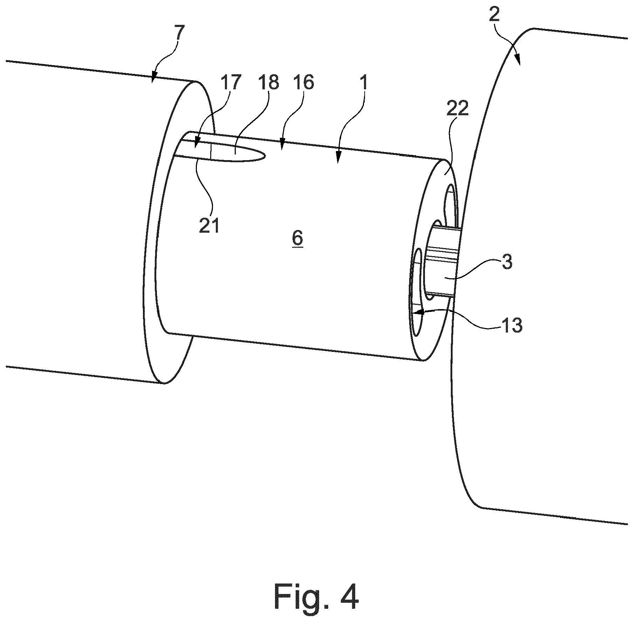

**Fig. 1** zeigt einen Längsschnitt durch eine erfindungsgemäße Ableitvorrichtung 1. Eine Zusammenschau der **Fig. 2** bis **4** zeigt einen Ausschnitt aus einer erfindungsgemäßen Maschine 100 mit einer Ableitvorrichtung 1. Bei der Maschine 100 handelt es sich vorliegend um einen Elektromotor, welcher ein Rotorteil mit einer Welle 2 aufweist. An einer Stirnseite 10 der Welle 2 ist die Ableitvorrichtung 1 zur Ableitung elektrischer Ströme angeordnet. Die Ableitvorrichtung 1 umfasst ein Kontaktelement 3 in Form einer Kohlenstoffbürste zur Ausbildung eines elektrisch leitenden Schleifkontaktes zwischen der zur Ausbildung des Schleifkontaktes vorgesehenen Schleifkontaktfläche 4 des Kontaktelements 3 und einer Wellenkontaktfläche 5 der Welle 2. Das Kontaktelement 3 ist in einer Führungseinrichtung 6 axial verschiebbar aufgenommen. Die Führungseinrichtung 6 ist als zylindrisches Gehäuse ausgebildet. Die Führungseinrichtung 6 ist teilweise in ein ebenfalls zylindrisch ausgebildetes Haltelement 7 integriert und wird von diesem gehalten. Das Kontaktelement 3 ist mittels einer Litze 8 elektrisch leitend mit der Führungseinrichtung 6 verbunden.

Das Kontaktelement 3 ist mittels einer Schraubendruckfeder 9 in Richtung der Wellenkontaktfläche 5 vorgespannt. Somit ist das Kontaktelement 3 zur Ausbildung eines elektrisch leitenden Schleifkontaktes zwischen der zur Ausbildung des Schleifkontaktes vorgesehen Schleifkontaktfläche 4 des Kontaktelements 3 und der axialen Wellenkontaktfläche 5 der Welle 2 durch die Feder 9 mit einer Kontaktkraft beaufschlagt. An der der Welle 2 zugewandten Seite der Führungseinrichtung 6 ragt die Kohlenstoffbürste 3 ein Stück weit aus dieser heraus und kontaktiert die Welle 2 an ihrer Stirnseite 10. Dabei ist das Kontaktelement 3 im Wesentlichen mittig zur Stirnseite 10 der Welle 2 und somit koaxial zur Welle angeordnet. Diese Stellung ist besonders vorteilhaft, da dadurch ein möglichst geringer Verschleiß des Kontaktelements 3 erreicht wird.

Am anderen Ende der Führungseinrichtung 6 weist diese einen Deckel 11 auf, an dem die Litze 8 befestigt ist. Zwischen dem Deckel 11 und dem Kontaktelement 3 ist die Feder 9 angeordnet, welche das Kontaktelement 3 in Richtung der Welle 2 vorspannt.

Die Führungseinrichtung 6 ist aus einem elektrisch leitenden Metall gefertigt, sodass zwischen der Führungseinrichtung 6 und einer die Führungseinrichtung 6 halternden Baugruppe der Maschine 100 eine elektrisch leitende Verbindung besteht. Im vorliegenden Ausführungsbeispiel besteht die Führungseinrichtung 6 aus Aluminium.

Die Litze 8 ist ebenfalls aus einem niederohmigen Material gefertigt. Die Litze 8 ist an einem Ende in das Kontaktelement 3 eingepresst und an ihrem anderen Ende durch Crimpen, Widerstandsschweißen oder Löten mit dem Deckel 11 verbunden. Die Litze 8 kann auch durch den Deckel 11 hindurchgeführt und anderweitig kontaktiert sein.

Das Kontaktelement 3 weist einen zweischichtigen Aufbau auf. Im Bereich der Schleifkontaktfläche 4 besteht das Kontaktelement 3 aus einer Graphit-Silber-Mischung. Hiervon betroffen ist insbesondere ein Abschnitt 12 des Kontaktelements 3. Der Silberanteil beträgt in diesem Bereich mindestens 3 Volumen.-%. Der übrige Bereich des Kontaktelements 3 besteht aus einer Graphit-Kupfer-Mischung. Der Abschnitt 12 des Kontaktelements 3 sowie die Welle 2 sind jedoch im Wesentlichen frei von Kupfer, um unerwünschte Reaktionen mit einem Öl zu vermeiden. Das Kontaktelement 3 ist als quaderförmiger Stift ausgebildet.

In der Führungseinrichtung 6 ist eine Leitung 13 ausgebildet, welche sich ausgehend von dem Deckel 11 in axialer Richtung zu einem Raum 14 zwischen der Führungseinrichtung 6 und der Welle 2 erstreckt und in offener Verbindung mit dem Raum 14 steht. Wie aus der **Fig. 2** zu erkennen ist, fließt Öl 20 vom Bereich des Deckels 11 in Richtung des Raumes 14 und ergießt sich in diesen. Dadurch wird der Abschnitt 12 des Kontaktelements 3 von Öl 20 umspült. In einem Abschnitt 15 besteht das Kontaktelement 3 aus einer Graphit-Kupfer-Mischung. Die Litze 8 ist hier mit dem Abschnitt 15 des Kontaktelements 3 und der Führungseinrichtung 6 bzw. dem Deckel 11 verbunden und verbindet diese Elemente elektrisch leitend.

In der Außenwand 16 der Führungseinrichtung 6 ist eine Leitung für das Öl in Form einer U-förmigen Längsnut 17 eingebracht. Diese im Außenumfang der Führungseinrichtung 6 angeordnete Längsnut 17 erstreckt sich vom unteren Ende 27, an welchem auch der Deckel 11 angeordnet ist, des Führungselements 6 über ca. die Hälfte der Länge der Führungseinrichtung 6. An ihrem oberen Ende 18 ist die Längsnut 17 im Querschnitt abgerundet ausgebildet. Das heißt, dass die Längsnut 17 an ihrem oberen Ende 18 nicht abrupt endet, sondern eine sich gleichmäßig reduzierende Tiefe aufweist.

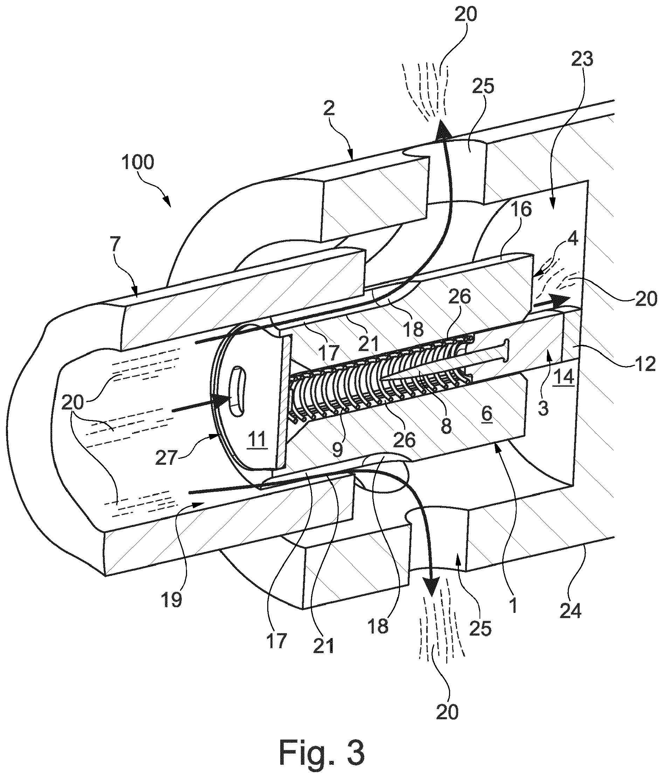

Die Ableitvorrichtung 1 ist derart im Halteelement 7 angeordnet, dass die Längsnut 17 im Außenumfang 16 der Führungseinrichtung 6 größtenteils vom Halteelement 7 bedeckt ist. Die Ableitvorrichtung 1 hat einen derart festen Sitz im Halteelement 7, dass eine Innenwand 19 des Halteelements 7 die Längskanten 21 der Längsnut 17 abdichtend kontaktiert. Dadurch bildet das Halteelement 7 mit der Längsnut 17 einen beidseitig offenen Ölleitungskanal. Durch die Tatsache, dass das Halteelement 7 das obere Ende 18 der Längsnut 17 nicht bedeckt, kann das zunächst zwischen der Innenwand 19 und der Längsnut 17 fließende Öl am oberen Ende 18 der Längsnut 17 radial abfließen. Dieser Ölfluss ist durch Pfeile in den **Fig. 2** und **3** gut zu erkennen. Im vorliegenden Ausführungsbeispiel sind zwei, sich gegenüberliegende Längsnuten 17 in der Außenwand 16 der Führungseinrichtung 6 angeordnet.

Wie bereits oben dargelegt, weist die Führungseinrichtung 6 in ihrer Wandung eine axiale Ölleitung 13 auf. Wie in den **Fig. 2** und **3** gut zu erkennen ist, kann mit der dort dargestellten Ausführungsform einer erfindungsgemäßen Ableitvorrichtung 1 sowohl ein Ölfluss in axialer Richtung, d. h. in Richtung des Raumes 14 zwischen der Welle 2 und dem oberen Ende der Führungseinrichtung 6, als auch in radialer Richtung erfolgen. Die Leitung 13 erstreckt sich vom Deckel 11, welcher eine entsprechende Ausnehmung 28 aufweist, zur oberen Stirnfläche 22 der Führungseinrichtung 6, in welche die Leitung 13 mündet. Die Wellenkontaktfläche 5 der Welle 2, welche von ihrer Stirnseite gebildet wird, ist versenkt in einer Ausnehmung 23 der Welle 2 angeordnet. In der Wandung 24 um die Ausnehmung 23 sind mehrere Aussparungen 25 angeordnet. Durch diese Aussparungen 25 kann das Öl, welches aus dem oberen Ende 18 der Längsnut 17 ausgetreten ist, in radialer Richtung weiterfließen, um so zur Kühlung und/oder Schmierung weiterer Motorkomponenten beitragen zu können.

## Patentansprüche

1. Ableitvorrichtung (1) zur Ableitung elektrischer Ströme aus einem mit einer Welle (2) ausgebildeten Rotorteil einer Maschine (100), umfassend ein mindestens teilweise in einer eine Führungswandung (26) und eine Außenwand (16) aufweisenden Führungseinrichtung (6) aufgenommenes, verschiebbares Kontaktelement (3) zur Ausbildung eines elektrisch leitenden Schleifkontaktes zwischen einer zur Ausbildung des Schleifkontaktes vorgesehenen Schleifkontaktfläche (4) des Kontaktelements und einer Wellenkontaktfläche (5) der Welle, wobei das Kontaktelement mit der Führungseinrichtung und/oder einem Halteelement (7) der Maschine (100) elektrisch leitend verbunden ist und wobei das Kontaktelement (3) mittels eines Federelements (9) in Richtung der Wellenkontaktfläche (5) vorgespannt ist, wobei das Kontaktelement (3) mindestens teilweise mit einem ölartigen Fluid (20) benetzt ist,
**dadurch gekennzeichnet,**
**dass** in der Führungseinrichtung (6) zumindest eine Leitung (17) für das ölartige Fluid (20) vorgesehen ist, welche in seiner Außenwand (16) mündet oder in seiner Außenwand (16) angeordnet ist.

2. Ableitvorrichtung nach Anspruch 1,
**dadurch gekennzeichnet,**
**dass** die Leitung für das ölartige Fluid (20) eine Längsausnehmung (17) in der Außenwand (16) der Führungseinrichtung (6) ist, welche sich vorzugsweise von einem unteren Ende (27) der Führungseinrichtung (6) über einen Teil der Länge der Führungseinrichtung (6) erstreckt.

3. Ableitvorrichtung nach Anspruch 2,
**dadurch gekennzeichnet,**
**dass** die Längsausnehmung (17) zumindest abschnittsweise mit einem im Wesentlichen U-förmigen Querschnitt, vorzugsweise in Art einer Nut ausgebildet ist.

4. Ableitvorrichtung nach einem der Ansprüche 2 oder 3,
**dadurch gekennzeichnet,**
**dass** sie von einem Halteelement (7) gehalten, vorzugsweise teilweise in einem Halteelement (7) angeordnet ist, wobei die Mündung (18) der Leitung (17) in der Außenwand (16) der Führungseinrichtung (6) nicht vom Halteelement (7) bedeckt ist.

5. Ableitvorrichtung nach Anspruch 1,
**dadurch gekennzeichnet,**
**dass** die Leitung als in der Führungseinrichtung verlaufender Kanal ausgebildet ist, welcher vorzugsweise am unteren Ende der Führungseinrichtung entspringt und in seiner Außenwand mündet.

6. Ableitvorrichtung nach einem der vorhergehenden Ansprüche,
**gekennzeichnet**
**durch** mindestens eine weitere in der Führungseinrichtung (6) angeordnete Leitung (13) für das ölartige Fluid (20), welche in einer oberen Stirnfläche (22) der Führungseinrichtung (6) mündet, wobei sich die Leitung (13) vorzugsweise von einem unteren Ende (27) der Führungseinrichtung (6), insbesondere einem Deckel (11) der Führungseinrichtung (6), zur oberen Stirnfläche (22) der Führungseinrichtung (6) erstreckt.

7. Ableitvorrichtung nach einem der vorhergehenden Ansprüche,
**dadurch gekennzeichnet,**
**dass** die Führungseinrichtung (6) mindestens teilweise aus einem niederohmigen Material, insbesondere aus Metall, vorzugsweise aus Aluminium, Aluminium-Legierung, Kupfer und/oder Messing gefertigt ist.

8. Ableitvorrichtung nach einem der vorhergehenden Ansprüche,
**dadurch gekennzeichnet,**
**dass** die Führungseinrichtung (6) mit einem Statorteil der Maschine (100) elektrisch leitend verbindbar ist.

9. Ableitvorrichtung nach einem der vorhergehenden Ansprüche,
**dadurch gekennzeichnet,**
**dass** das Kontaktelement (3) mit der Führungseinrichtung (6) oder einem Halteelement der Maschine (100) mittels einer, vorzugsweise niederohmigen Litze (8) elektrisch leitend verbunden ist, wobei die Litze (8) an einem Ende vorzugsweise in das Kontaktelement (3) eingepresst oder eingestampft ist und am anderen Ende mit der Führungseinrichtung (6) vorzugsweise verschweißt oder verlötet oder gecrimpt ist.

10. Ableitvorrichtung nach einem der vorhergehenden Ansprüche,
**dadurch gekennzeichnet,**
**dass** das Kontaktelement (3) eine stift- oder bolzenförmig ausgebildete Bürste ist, wobei die Schleifkontaktfläche (4) vorzugsweise rechteckig, polygonal oder kreisförmig ausgebildet ist.

11. Ableitvorrichtung nach einem der vorhergehenden Ansprüche,
**dadurch gekennzeichnet,**
**dass** das Federelement (9) eine Schraubendruckfeder ist, welche mit einem Ende vorzugsweise an der der Schleifkontaktfläche (4) gegenüberliegenden Stirnseite des Kontaktelements (3) anliegt.

12. Maschine (100), insbesondere elektrischer Antriebsmotor oder Getriebe mit einem eine Welle (2) aufweisenden Rotorteil sowie einer Ableitvorrichtung (1) nach einem der vorhergehenden Ansprüche, wobei das Kontaktelement (3) der Ableitvorrichtung (1) zur Ausbildung eines Schleifkontaktes die Welle mit seiner Schleifkontaktfläche (4) kontaktiert.

13. Maschine nach Anspruch 12,
**dadurch gekennzeichnet,**
**dass** die Ableitvorrichtung (1) von einem Halteelement (7) gehalten, vorzugsweise teilweise in diesem angeordnet ist, wobei die Mündung (18) der Leitung (17) in der Außenwand (16) nicht vom Halteelement (7) bedeckt ist.

14. Maschine nach Anspruch 13,
**dadurch gekennzeichnet,**
**dass** die Leitung in der Führungseinrichtung (6) eine Längsausnehmung, insbesondere Längsnut (17) in der Außenwand (16) des Führungselements (6) ist, welche sich vorzugsweise von einem unteren Ende (27) der Führungseinrichtung (6) über einen Teil der Länge der Führungseinrichtung (6) erstreckt, wobei das Halteelement (7) die Längsausnehmung (17) teilweise bedeckt, vorzugsweise abdichtend bedeckt, so dass das Halteelement (7) mit der Längsausnehmung (17) einen Leitungskanal für das ölartige Fluid (20) bildet.

15. Maschine nach einem der Ansprüche 12 bis 14,
**dadurch gekennzeichnet,**
**dass** das Kontaktelement (3) eine Stirnfläche (4) der Welle (2) kontaktiert, welche Stirnfläche (4) in einer Ausnehmung (23) der Welle (2) angeordnet ist, wobei in einer von der Ausnehmung (23) gebildeten Wandung (24) mindestens eine Aussparung (25) zum Abfließen von ölartigem Fluid (20) angeordnet ist.
